# EUROPÄISCHE PATENTSCHRIFT

(11) **EP 2 007 683 B1**
(45) Veröffentlichungstag und Bekanntmachung des Hinweises auf die Patenterteilung: **23.05.2018**
(21) Anmeldenummer: 07724044.8
(22) Anmeldetag: 05.04.2007
(51) Int. Cl.: C02F 1/00

(54) **WASSERFILTER-KARTUSCHENSYSTEM MIT KOMBINIERTER VERSCHNEIDEVENTILTECHNIK UND EINSTELLVORRICHTUNG IN DER KERZE UND IM KOPF**
WATER FILTER CARTRIDGE SYSTEM HAVING A COMBINED BLENDING VALVE SYSTEM AND ADJUSTING DEVICE IN THE CANDLE AND IN THE HEAD
SYSTÈME DE CARTOUCHE POUR FILTRE À EAU COMPORTANT UN SYSTÈME DE SOUPAPE DE MÉLANGE COMBINÉ ET UN DISPOSITIF DE RÉGLAGE DANS LA BOUGIE ET DANS LA TÊTE

(30) Priorität: 05.04.2006 DE 102006016357; 20.09.2006 DE 102006044746; 28.02.2007 DE 102007010129
(43) Veröffentlichungstag der Anmeldung: 31.12.2008
(60) Teilanmeldung: 12005603.1
(73) Patentinhaber: Aquis Wasser-Luft-Systeme GmbH, Lindau, 9445 Rebstein (CH)
(72) Erfinder: SCHOLZ, Roland, 42781 Haan (DE); WAWRLA, Andreas, 9443 Widnau (CH)
(74) Vertreter: Otten, Roth, Dobler & Partner mbB Patentanwälte
(86) Internationale Anmeldenummer: PCT/EP2007/003103
(87) Internationale Veröffentlichungsnummer: WO 2007/115793

(56) Entgegenhaltungen:
- EP-A- 0 844 339
- WO-A-2004/007374
- DE-A1- 4 422 709
- DE-A1- 19 958 648
- JP-A- 9 174 050
- US-A- 5 174 337
- US-B2- 6 923 910
- US-B2- 6 949 189

## Beschreibung

Die vorliegende Erfindung betrifft einen Wasserfilter entsprechend des Oberbegriffs des Anspruchs 1.

### Stand der Technik:

Enthärtungs-/ Entkarbonisierungs- / Entmineralisierungs-Systeme auf Basis von Austausch- Filter- Kerzen, beinhalten zur Einstellung einer für die jeweilige Anwendung vorbestimmten Wasserqualität eine Verschnitteinrichtung zum Zwecke der abgestimmten Mischung von über die Filterstrecke aufbereitetem Wasser mit nicht filtriertem oder über ein anderes Wasseraufbereitungsmedium geleitetem Wasser.
Diese Systeme finden Anwendung bei der Trinkwasseraufbereitung in privaten Haushalten und in der Gastronomie, als zentrale oder dezentrale Installation für die Speisung von Entnahmestellen und im speziellen für die Speisung von modernen Küchengeräten, z.B. Kaffeemaschinen, Wasser- Zapfstellen und Eisbereiter (z.B.. in modernen Kühlschränken), und darüber hinaus im kommerziellen Bereich zur Speisung von Getränkeautomaten zur Bereitung von Kalt- und Heissgetränken, von Geschirrspülmaschinen und Dampfgarern zum Zwecke der Geschmacksoptimierung der damit aufbereiteten oder hergestellten Getränke und Speisen und zum Schutz der Maschinen vor wasserbedingten technischen Problemen.

Nach dem Stand der Technik gibt es hierzu einfache Lösungen mit festen Bohrungen im Kartuschenkopf. Bei diesen Lösungen bleibt das Verschnittwasser unfiltriert und eine Adaption der Filterkartusche an spezifische Anforderungen ist nicht möglich.

Eine weitere bekannte Möglichkeit der Ausführung ist die Integration einer verstellbaren Verschneideeinrichtung im Kopf. Hier kann zwar die Verscheidung individuell angepasst werden, aber eine Filtration des Verschnittwassers - z.B. über Aktivkohle - ist nicht möglich, da es an der Filterkartusche vorbeigeführt wird.

Es existieren auch bereits Konstruktionen mit Verschneidevorrichtung im Filterkopf, die eine getrennte Führung vom Hauptwasserstrom und Verschnittwasserstrom zur Filterkartusche vorsehen, wobei das Verschnittwasser zusätzlich über andere Aufbereitungsmedien in der Kartusche geführt wird. Nachteilig bei diesen Konstruktion ist der erhebliche Aufwand im Filterkopf durch das Verschneideventil und die Trennung von 3 Volumenströmen: a) für die Aufbereitungsstrecke, b) für die Verschnittwasserstrecke und c) für die Rückführung des Gesamtfiltrats. Diese Konzepte werden z.B. in der DE 199 58 648 A1 und WO2004/007374 A1 beschrieben.

Eine weitere Möglichkeit stellt die Integration des Verschneideventils in die Kartusche dar. Hierbei sind Konstruktionen bekannt, welche eine Filtration des Verschnittwassers zulassen und solche, welche keine Filtration des Verschnittwassers zulassen. Ein Konzept ohne Filtration des Verschnittwassers wird z.B. in der US 6923.910 B2 beschrieben. Bei diesen Ausführungen sind die Kopfkonstruktionen einfach, da diese kein Verschneideventil enthalten und lediglich 2 Volumenströme geführt werden müssen.

Darüber hinaus sind auch Konstruktionen bekannt, die eine Einstellung der Verschnittwassermenge in der Filterkartusche ermöglichen. Nachteilig bei der in die Kartusche integrierten Verschneidetechnik ist die Notwendigkeit, dass bei jedem Kartuschenwechsel das Verschnittverhältnis an der Filterkartusche neu eingestellt werden muss, um die Wasserqualität an die Anwendung erneut anzupassen. Bei einem Kartuschenwechsel werden beim Einstellen der Verschnittmenge häufig Fehler gemacht, oder die Einstellung wird sogar vollkommen vergessen, wodurch unerwünschte Effekte wie Verkalkung der Maschinen und Qualitätsprobleme bei den zubereiteten Lebensmitteln entstehen.

### Aufgabe und Lösung:

Der vorliegenden Erfindung liegt die Aufgabe zugrunde einen Wasserfilter entsprechend der einleitend dargelegten Art zu verbessern.

Gelöst wird diese Aufgabe durch den Anspruch 1. Durch die Unteransprüche werden weitere vorteilhafte und zweckmäßige Ausführungsformen angegeben.

Dementsprechend betrifft die vorliegende Erfindung einen Wasserfilter, bestehend aus einem Filterkopf, einer auswechselbaren

Filterkartusche, einer Verschneidvorrichtung und einer Einstellvorrichtung zum Einstellen eines Teilstromverhältnisses zwischen mindestens zwei Strömungspfaden, wobei wenigstens ein Strömungspfad eine Filterstrecke umfasst. Der zweite oder ein noch weiterer Strömungspfad kann z.B. eine weitere Filterstrecke, eine Verschneidestrecke zur Vermengung des über die Filterstrecke geführten Wasser mit einem vorzugsweise einstellbaren Anteil von gegebenenfalls über ein Kohlefilter geführtem Rohwasser oder eine andere Wasseraufbereitungsstrecke sein. Der Wasserfilter zeichnet sich dadurch aus, dass die Einstellvorrichtung ein im bzw. am Filterkopf angeordnetes Rohwasser-Verteilungselement und ein dazu komplementäres, in bzw. an der Filterkartusche angeordnetes Teilstrom-Kanalführungselement umfasst.

Neben den bereits zur ersten, oben angegebenen Ausführungsform angegebenen Vorteilen weist diese Ausführungsform eines Wasserfilters zusätzlich den Vorteil auf, dass die Verschnitteinstellung zwischen Filterstrecke und Bypassstrecke durch zwei komplementäre, erst beim Einbau einer Filterkartusche in einen Filterkopf zusammenfügbare und/oder gegeneinander positionierbare Verschnittverhältnis-Einstellelemente erfolgt und damit eine gewollte oder ungewollte Manipulation und eine damit einhergehende, gegebenenfalls unsachgemäß Verwendung der Filterkartusche weiter erschwert bzw. verunmöglicht wird.

Insbesondere kann dieser Vorteil dadurch erreicht werden, dass das Rohwasser-Verteilungselement als Teil des Filterkopfes ausgebildet ist. Z.B. als Hülse und/oder Ring mit wenigstens einem Durchlass- oder Sperrelement, wie beispielsweise einer Öffnung bzw. einer Abdeckung oder einem Verschluss zu einer Öffnung, welches mit einem komplementären Element an der Filterpatrone zusammenwirken kann. Durch die Anordnung im Filterkopf kann es entsprechend vorpositioniert werden. Hierdurch kann gegebenenfalls eine andernfalls erforderliche Ausrichtung des Verschnitteinstellelementes in seiner relativen Position zum Filterkopf bis auf einen ersten, grundsätzlichen Einstellvorgang des Verschnittverhältnisses entfallen. Eine Einstellung der relativen Position der zwei zueinander komplementären Elemente beim Einsatz einer neuen Filterkartusche ist damit nicht mehr erforderlich. Sie ergibt sich automatisch durch die alte Verschnitteinstellung und die montagebedingte Betriebsposition der Filterkartusche. Dennoch ist eine gegebenenfalls erforderliche Nachregelung des Verschnittverhältnisses durch die Betätigung eines entsprechenden, auf das Rohwasser-Verteilungselement wirkenden Verstellelementes möglich.

Wenn das Rohwasser-Verteilungselement als in den Filterkopf einsetzbares Element ausgebildet ist, kann ein entsprechender Wasserfilter wiederum als Teil eines Wasserfilter-Systems konzipiert werden, bei dem derselbe Kopf für verschiedene Anwendungsfälle mit verschiedenen Rohwasser-Verteilungselementen und in Folge dessen auch mit verschiedenen Filterkartuschen kombiniert werden kann. Und umgekehrt könnten bei gleichem Einstellelement mit verschiedenen Filterkerzen unterschiedliche Kanalstromführungsgeometrien realisiert werden, das heißt mit gleichem Kopf, Kerzen mit unterschiedlicher Strömungscharakteristik bzw. umgekehrt. Hierzu sind auch verschiedene Ausführungsformen in der Verbindung zwischen dem Rohwasser-Verteilungselement und dem Filterkopf denkbar. Für Anwendungsfälle, bei denen es in erster Linie darauf ankommt, dass Manipulationen zuverlässig unterbunden werden können, empfiehlt sich die Verwendung einer unlösbaren Verbindung zwischen dem Rohwasser-Verteilungselement und dem Filterkopf.

Bei Anwendungsfällen bei denen eher auf eine flexible Verwendung unterschiedlicher Filterkartuschen Wert gelegt wird, wie z.B. beim Vorsehen einer Anschlussmöglichkeit für unterschiedliche Geräte, wie Getränkeaufbereitungsmaschinen, Kühlschränke oder Reinigungsgeräte, kann demgegenüber eine lösbare Verbindung zwischen dem Rohwasser-Verteilungselement und dem Filterkopf als vorteilhaft angesehen werden. Zur Erhöhung der Manipulationssicherheit kann hierbei beispielsweise ein spezielles Werkzeug zum Wiederlösen eines bereits installierten Rohwasser-Verteilungselementes vorgesehen sein. Ein solches Werkzeug ist insbesondere dann von Vorteil, wenn das Rohwasser-Verteilungselement als Wechselelement ausgebildet ist.

Zur Bedienung bzw. zur Einstellung des Rohwasser-Verteilungselementes kann weiterhin in vorteilhafter Weise ein Kontrollelement vorgesehen sein, welches z.B. ein Stellorgan umfasst. In einer einfachen Ausführungsform kann dies beispielsweise ein Stellrad mit einer entsprechenden Verbindung zum Rohwasser-Verteilungselement sein. In einer gehobeneren Ausführungsform ist aber auch durchaus eine Verstellung mittels eines Motors oder mit einem anderen, geeigneten Stellmittel denkbar, beispielsweise wenn die geforderte Wasserqualität aufgrund der Betriebsdauer oder anderer Ursachen nicht mehr der gewünschten Wasserqualität entspricht und demnach eine Nachregelung erforderlich werden sollte.

Ein solches Kontrollelement kann somit grundsätzlich einen Regelkreis umfassen, der unter Umständen auch die Güte bzw. Qualität des gefilterten Wasser überprüft und bei Bedarf die Einstellung der Verschnittstrecke z.B. mit einer entsprechenden Positioniereinheit nachregelt und in besonders vorteilhafterweise auch arretiert.

Das Rohwasser-Verteilelement kann hierfür zumindest ein Durchlass- und/oder Abdeckelement umfassen, welches z.B. blendenartig mit der ihr jeweils zugeordneten Öffnung für die Filterstrecke bzw. für die Bypassstrecke zusammenwirkt. Dementsprechend kann bei Verdrehen des Rohwasser-Verteilungselementes eine Änderung des aktiven Durchflussquerschnittes der einen oder der anderen Strecke erfolgen, bzw. in einer besonders bevorzugten Ausführungsform eine komplementäre Änderung der beiden Durchlassquerschnitte, so dass der insgesamt verbleibende effektive Gesamtdurchlassquerschnitt zur Beibehaltung eines im Wesentlichen konstanten Systeminnendrucks gleich bleibt. Dadurch kann für alle in einem Filterkopf installierten Filterkartuschen auch für unterschiedliche Verschnitteinstellungen eine vom Durchflussvolumen im Wesentlichen unabhängige, gleichmäßige Verschnitt- und Filterwirkung bewirkt werden.

Das Rohwasser-Verteilungselement kann verschiedene Formen aufweisen, z.B. eine Ring- oder Scheibenform. Eine solche scheiben- oder ringförmige Ausführungsform kann beispielsweise die oben beschriebene Blendenwirkung durch Überdecken bzw. Freigeben der beiden oder gegebenenfalls auch mehrerer Zuläufe, Filterstrecke bzw. Bypassstrecke mit zwei flach zueinander ausgerichteten Elementen realisieren.

Im Gegensatz zu einer Ring- oder Scheibenform, oder auch zusätzlich, kann das Rohwasser- Verteilungselement aber auch eine Hülsenform aufweisen. Dies ist beispielsweise dadurch realisierbar, dass zwei oder mehrere koaxial zueinander ausgerichtete Rohre oder Hülsen entsprechend gegeneinander positionierbar angeordnet sind, wobei wenigstens eine der beiden Hülsen wenigstens eine Durchgangsöffnung, vorzugsweise jedoch mehrere aufweist, die durch die andere Hülse bei einer relativen Verschiebebewegung der beiden Hülsen zueinander verdeckt bzw. freigegeben wird bzw. werden. Diese relative Verschiebebewegung zwischen den beiden Hülsen kann z.B. über ein entsprechend vorgesehenes und z.B. durch eines der oben beschriebenen Stellmittel betätigbares Gewinde erfolgen. Denkbar sind aber auch andere Verstellmechanismen, wie Zug- und/oder Druckmittel, vorzugsweise in Kombination mit Arretierungsmittel.

Das zum Rohwasser-Verteilungselement komplementäre Teilsstrom-Kanalführungselement weist bevorzugt mindestens einen Filterstreckeneinlass und mindestens einen Verschnittstreckeneinlass bzw. Filter- oder Wasseraufbereitungsstreckeneinlass auf. Je nach Anwendungsfall kann der Filterstreckeneinlass und/oder der Verschnittstreckeneinlass bzw. der Filter- oder Wasseraufbereitungsstreckeneinlass auch mehrere Einlassöffnungen aufweisen. Hierdurch ist beispielsweise eine Einflussnahme auf das Strömungsverhältnis in der Filterkartusche möglich, es können aber auch Gründe einer groben Vorfilterung Anlass für einen derartigen Aufbau geben, so dass in der Leitung angespülte größere Partikel gar nicht erst in den Filter eindringen und in gegebenenfalls verstopfen können.

Je nach Anwendungsfall und/oder Ausführungsform der beiden das Verschnittverhältnis einstellenden Elemente können die Einlassöffnungen schlitzförmig und/oder auch überwiegend kreisförmig bis oval ausgebildet sein.

Mit allen oben angebenden Ausführungsformen ist es grundsätzlich möglich, dass der vom Rohwasser-Verteilungselement wirksam freigegebene, aus der Summe der beiden Teilströme gebildete Gesamtquerschnitt des Teilstrom-Kanalführungselementes im Wesentlichen in allen Verschnitteinstellungen gleichgroß ist, so dass ein überwiegend gleichbleibendes Innendruckverhältnis im System und ein vom Durchströmungsvolumen weitgehend unabhängiges Verschnittverhältnis gewährleistet wird.

Neben dieser besonders bevorzugten, ein im Wesentlichen konstantes Innendruckverhältnis gewährleistenden Ausführungsform kann aber durchaus auch eine unterschiedliche Variierung der jeweils einzelnen, wirksamen Teilströme durch das Teilstrom-Kanalführungselement in Zusammenwirkung mit dem Rohwasser-Verteilungselement vorgesehen sein. In einer besonders einfachen Ausführungsform könnte beispielsweise lediglich einer der beiden Streckenzuläufe, Filterstrecke, bzw. Bypassstrecke in seinem effektiv wirksamen Querschnitt beeinflusst werden.

Zur Erhöhung der Betriebssicherheit und zur Reduzierung einer Manipulationsmöglichkeit wird im Weiteren vorgeschlagen, dass zwischen einem dem Filterkopf zugeordneten Element und einem der Filterkartusche zugeordneten Element eine Verschlüsselung ausgebildet ist. Eine solche Verschlüsselung weist vorzugsweise sich axial erstreckende, komplementäre Elemente auf. Eine mögliche Ausführungsform einer solchen Verschlüsselung könnte z.B. durch eine Verzahnung realisiert sein. Diese Verzahnung kann einen oder mehrere Zähne umfassen, welche in entsprechend komplementäre Ausnehmungen eingreift und in besonders bevorzugter Weise eine Betätigung von im Kopf angeordneten, durch eine Drehbewegung aktivierbaren bzw. deaktivierbaren Elementen bewirken. Ein derart betätigbares Element kann beispielsweise ein Einlassventil ein Auslassventil und/oder ein Entspannungsventil, ein Rohrwasser-Verteilungselement und/oder eine Kombination einzelner oder mehrerer dieser Elemente sein.

Ein solches Verschlüsselungselement kann somit gleichzeitig auch als Kontrollelement für eine bestückungsabhängige Positionierung des Ein- und/oder Auslassventils eines Entspannungsventils oder dergleichen sein. Dies ist jedoch nicht zwingend erforderlich, so dass ein entsprechendes Kontrollelement durchaus auch als separat ausgebildetes Stellelement ausgebildet sein könnte, z.B. in der Form eines Stellringes und/oder einer Stellhülse. Diese können wiederum ein weiteres Betätigungselement wie z.B. eine Betätigungs- und/oder Stellnocke, eine Führungs- und/oder Stellkante oder dergleichen mehr umfassen.

### Ausführungsbeispiel:

Die vorliegende Erfindung wird nachfolgend anhand der beigefügten Figuren und der darauf bezugnehmenden Beschreibung näher erläutert.

Es zeigen:
- Figur 1: eine schematische Schnittdarstellung durch einen nicht erfindungsgemäßen Wasserfilter, bestehend aus einem Filterkopf und einer auswechselbaren Filterkartusche in einem Längsschnitt und
- Figur 1a: die Filterkartusche aus Figur 1 in Draufsicht,
- Figur 2: eine gegenüber der Ausführungsform in der Figur 1 abgewandelte erfindungsgemäße Ausführung,
- Figuren 3 bis 5: schematische, perspektivische Ansichten einer Filterkartusche in unterschiedlichen Bestückungsdarstellungen,
- Figur 6: eine Unteransicht auf einen Filterkopf mit einem schematisch darin dargestellten Rohwasser-Verteilungselement,
- Figuren 7 bis 9: ein Rohwasser-Verteilungselement mit ihm zugeordneten Fixier- und Stellelement in unterschiedlich ausgerichteten, schematischen Darstellungen,
- Figur 10: einen Längsschnitt durch die in der Figur 9 dargestellten Elemente und

### Konstruktive Ausführung:

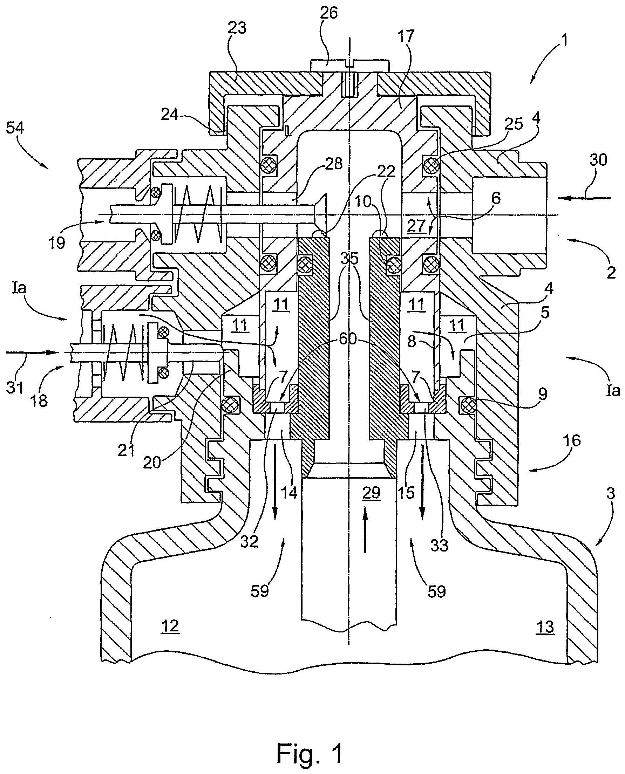

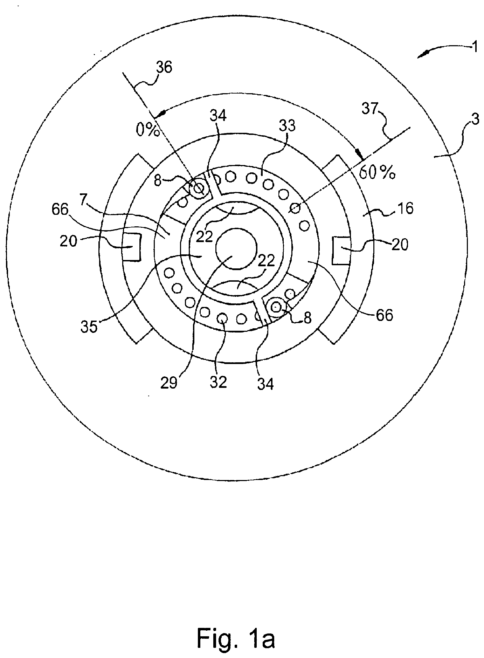

Das System des Wasserfilters 1 besteht aus einem Filterkopf 2, welcher fest installiert und an die Trinkwasserversorgung angeschlossen ist, und einer Filterkerze 3, welche austauschbar ist. Der Austausch der Filterkerze, die an anderer Stelle der Beschreibung mit der gleichen Bedeutung auch als "Filterkartusche" bezeichnet ist, erfolgt nach Erschöpfung der Aufbereitungsmedien oder nach Einsatzdauer (Figur 1).

Der Filterkopf 2 besteht im Wesentlichen aus einem Filterkopfgehäuse 4, welches durch zwei konzentrische Bohrungen 5, 6 mit unterschiedlichem Durchmesser zur Aufnahme der Filterkartusche 3 besteht. Ähnliche Kopf-Kerzen-Adaptionen sind bereits im Markt bekannt. Diese Konstruktion hat eine Verschnitteinstellhülse 17 mit einem oder mehr Mitnehmern 8, welche von außen drehbar im Filterkopf 2 angeordnet ist. Der Verschnittanteil kann mittels Drehung der Verschnitteinstellhülse 17 am Kopf 2 stufenlos oder in abgestuften Werten (z.B. 0%, 10%, 20% 30%, 40% etc.) rastend eingestellt werden. Zur Betätigung der Verschnitteinstellhülse 17 ist ein Stellrad 23 z.B. in der Form einer Kappe vorgesehen, welches über einen entsprechenden Mitnehmer mit der Verschnitteinstellhülse 17 eine Drehbewegung übertragend verbunden ist. Der Verstellwiderstand dieser Kappe zur Verdrehung der damit verbundenen Verschnitteinstellhülse 17 kann z.B. über den Reibwiderstand der Dichtung 25 gegenüber dem Gehäuse 4 und/oder weiteren Berührungsflächen zwischen der Verschnitteinstellhülse 17 und dem Gehäuse 4 beeinflusst werden. Je nach Anwendungsfall oder Ausführungsform kann zusätzlich eine Rastung 24 vorgesehen sein, wie z.B. hier durch Vorspannung der äußeren Kappenränder gegenüber der ihr zugewandten Außenseite des Gehäuses 4. Die Rastungen können hierfür z.B. durch eine gegenseitig eingreifende Verzahnung oder dergleichen ausgebildet sein. Als Fixiermittel der Kappe 23 an der Verschnitteinstellhülse 17 kann beispielsweise eine Schraube 26 dienen. Denkbar sind aber auch Schnappverschlüsse oder andere geeignete Verbindungen.

Um den durch den Filterausgang 29 aus der Filterkartusche 3 ausströmenden, filtrierten Wasserstrom über den Auslass 30 aus dem Filterkopf ausströmen lassen zu können, weist die Verschnitteinstellhülse 17 eine entsprechend angeordnete und ausgebildete Öffnung 27 für den Durchlass des Filtratstroms auf. Eine zweite Öffnung 28 ist hier gegenüberliegend in der Verschnitteinstellhülse 17 für den Zugang zu einem Entspannungs- und/oder Spülventil 19 vorgesehen. Somit kann der durch den Einlass 31 in den Filterkopf einströmende Wasserstrom erfindungsgemäß auf eine Filterstrecke 12 und eine Bypassstrecke 13 einer Verschneidevorrichtung 59 verteilt die Filtervorrichtung durchfliesen und durch den Auslass 30 mit der gewünschten bzw. eingestellten Wasserqualität wieder verlassen.

Die Filterkartusche 3 hat zwei Dichtelemente 9, 10, welche die Kartusche nach außen abdichten: Eine Dichtung 10 zur Abtrennung des Gesamtfiltrats und eine zur Abdichtung 9 des Rohwasserzulaufes.

In den Rohwasserzulauf 11 der Kartusche ist erfindungsgemäß ein Verschnitteinstellring 7 als sogenanntes Rohwasser-Verteilungselement integriert, welcher das Rohwasser im Zulauf der Kerze 3 aufteilt und den getrennten Aufbereitungsstrecken für z.B.. Enthärtung 12 und Verschnitt 13 zuführt. Die Aufteilung des Rohwassers erfolgt über einen drehbaren Ring 7, welcher zusammen mit den Durchlässen 14, 15 des Filterkartuschendeckels eine Blende bildet, welche je nach Winkelstellung des Ringes 7 zu den Durchlässen 14, 15 die Durchlässe 14, 15 für den Verschnitt- 13 und Hauptaufbereitungskanal 12 abdichtet bzw. freigibt. Hierbei ist es besonders günstig, wenn bei Verkleinerung des Durchgangs 13 zur Verschnittstrecke gleichzeitig der Querschnitt des Durchgangs zur Aufbereitungsstrecke 12 vergrößert wird und umgekehrt.

In der hier beschriebenen Konstruktion befindet sich der Einlass 12 für das aufzubereitende Wasser um circa 180° versetzt zum Einlass 13 für das Verschnittwasser. Die genaue Position der Einlässe für den Aufbereitungskanal und den Verschnittwasserkanal in der Kerze 3 kann individuell mit dem Verschnitteinstellring 7 abgestimmt werden, um die gewünschte Verschnitteinstellung und die korrespondierenden Strömungswiderstände in Abhängigkeit des Verdrehwinkels des Verschnitteinstellrings 7 zu erhalten.

Die Verdrehung des Rings 7 wird in einer ersten Ausführungsform, bei der der Verschnitteinstellring 7 an der Filterkartusche 3 angeordnet ist, während der Installation der Filterkartusche 3 in den Filterkopf 2 automatisch (zwangsweise) durchgeführt. Hierzu ist es erforderlich, dass die Verbindung zwischen Filterkopf und Filterkartusche durch beispielsweise ein Bajonett 16 mit mindestens zwei Laschen hergestellt wird. Es kann dann eine Drehbewegung von ca. 90° durchgeführt werden. Sind die Bajonettlaschen kleiner als die Durchbrüche, so sind auch Verdrehwinkel größer 90° prinzipiell möglich. Bevorzugt ist jedoch ein Verdrehwinkel von ca. 90° bei einer Ausführung mit 2 Bajonettlaschen.

Damit eine Voreinstellung des Verschnitts am Filterkopf möglich ist, muss der drehbare Ring 7 genau wie die Verschnitteinstellhülse 17 mindestens einen Mitnehmerhaken, bevorzugt zwei Mitnehmerhaken besitzen. Wird nun die Kartusche 3 installiert (das Bajonett geschlossen), so treffen sich die Mitnehmerhaken von Verschnitteinstellhülse 17 und drehbarem Ring 7 ab einer gewissen Winkelstellung bei der Installation. Wird nun die Installation bzw. Drehbewegung bis zur Verschlussstellung des Bajonetts weitergeführt, so wird der drehbare Ring durch den Mitnehmerhaken des Kopfes festgehalten und die Kartusche dreht sich unter dem (relativ zum Kopf) stehenden Ring 7 weiter und verstellt damit die Verschnitteinstellung der Filterkartusche 3.

Um die erfindungsgemäße Einstellung des Verschnitts am Ring 7 der Filterkartusche 3 zu gewährleisten, ist es vorteilhaft, wenn sich der Ring 7 vor der Installation in einer Ausgangsposition befindet. Für die Ausgangsposition kommen je nach Auslegung der Konstruktion die beiden Extrempositionen für die Einstellung des Rings in Frage. Dies sind die Positionen des Rings, welche einen vollständigen Verschluss des Verschnitts oder eine maximale Öffnung des Verschnitts erlauben. Im ersten Fall kann je nach Position der Mitnehmerhaken der Verschnitteinstellhülse der Verschnitt der Filterkerze mehr oder weniger gegenüber der Ausgangsposition geöffnet werden, im zweiten Fall kann der Verschnitt je nach Position der Mitnehmerhaken der Verschnitteinstellhülse mehr oder weniger gegenüber der Ausgangsposition beim Hereindrehen der Filterkartusche in den Kopf geschlossen werden.
Der zentrale Gedanke dieser Konstruktion ist die Nutzung der Drehbewegung bei der Installation der Filterkerze 3 in den Filterkopf 2 über die Bajonettverbindung 16 zur Einstellung des Verschnittverhältnisses.

Wie bereits oben beschrieben, wird die Drehbewegung zur Einstellung des Verschnitts während der Installation genutzt. Man kann diese Drehbewegung noch zur Betätigung eines Zulaufventils 18 und/oder Entspannungs-/Spülventils 19 nutzen. So ist solch eine Nutzung der Drehbewegung bei der Installation der Filterkerze in den Kopf z.B. vom Patent US 6949.189. B2 bekannt. Hier wird ein Verschlussventil im Filterkopf durch zwei ineinander gesteckte Hülsen mit geeignet angeordneten Löchern und Dichtelementen gebildet, wobei die Betätigung des rotierenden Ventils durch Mitnehmer an der Kartusche erfolgt. Diese Konstruktion lässt sich nicht mit der oben erwähnten Verschnitteinstellung kombinieren. Es wird daher eine neuartige Ventilbetätigungsmechanik über Nocken 20 und Ventilstößel 21 vorgeschlagen. Konstruktionen dieser Art sind sonst nur im Bereich der Wasserhahnfilter ("faucet mount -Wasserfilter") bekannt, wobei hier die Betätigung der Ventilelemente über eine separate Betätigungswelle mit Bedienhebel erfolgt.

Hier ist die Betätigungswelle die Symmetrieachse des Filterkartuschendeckels. Entsprechend ist an dem Kartuschendeckel gemäß Zeichnung zumindest ein Nocken 20 angebracht (aus Symmetriegründen bevorzugt zwei), welcher den Ventilstößel 21 bei geschlossener Bajonettverbindung zurückstößt, wodurch der Rohwasserzulauf freigegeben wird. Wird die Filterkartusche aus dem Filterkopf entnommen, so ist das Zulaufventil 18 geschlossen. Der Betätigungsnocken 20 kann bevorzugt oberhalb des äußeren Dichtelements 9 angeordnet werden. Zur Öffnung des Rohwasserventils 18 (Zulauf zur Kartusche) genügt ein Drehwinkel von 5 bis 50° bevorzugt 10°. Zur Entspannung der Filterkerze vor der Entnahme der Kartusche wird ein Mitnehmer 22 oberhalb des zweiten Dichtelements 10 des Filterkartuschendeckels vorgesehen, welcher ein zweites Ventil 19 (z.B. Tellerventil) im Filterkopf betätigt, siehe Zeichnung. Dieses Ventil 19 ist geschlossen, wenn die Filterkartusche entnommen ist. Das zweite Ventil 19 ist ebenso geschlossen, wenn die Filterkartusche im Filterkopf installiert bzw. das Bajonett vollständig geschlossen ist. Die Betätigung d.h. Öffnung des Ventils 19 erfolgt durch den Mitnehmer 22 (aus Symmetriegründen bevorzugt zwei Mitnehmer), welcher als Haken ausgeführt ist und dadurch das zweite Ventil 19 aufzieht. Das Aufziehen des Ventils geschieht in einem Winkelbereich des Bajonetts, wo das Rohwasserventil 18 geschlossen ist und die Filterkartusche im ungefähr halbgeschlossenen Bajonett verankert ist.

Es ist nun möglich, das zweite Ventil 19 mit einem zusätzlichen von außen zu betätigenden Ziehmechanismus auszustatten. Dies kann über eine Schraubenkonstruktion oder ähnliches erfolgen. Damit kann dann dieses Ventil 19 auch in Installationsposition manuell betätigt werden, wodurch dieses Ventil dann als Spülventil für die Inbetriebnahme der Filterkartusche zusätzlich genutzt werden kann.

Um die automatische Funktion als Entspannungsventil aufrechtzuerhalten, muss der manuelle Betätigungsmechanismus mit ausreichendem Spiel vorgesehen werden. (Bei manuell betätigtem Ventil darf der Betätigungshaken der Kartusche nicht mit dem Ventil kollidieren. Umgekehrt darf der manuelle Betätigungsmechanismus in geschlossener Position eine automatische Öffnung über den Haken nicht behindern.)

Die Figur 1a zeigt eine Draufsicht auf die Kartusche 3 des Wasserfilters 1 aus der Figur 1. Zentral in der Mitte ist der Filterausgang 29 dargestellt, durch den der filtrierte Wasserstrom die Kartusche 3 verlässt. Darüber und darunter sind die beiden an der Stirnseite der Außenwandung 35 des Filterausgangs 29 angeordneten Mitnehmer 22 zur Betätigung des Entspannungs- und/oder Spülventils 19 zu erkennen.

Der Verschnitteinstellring 7 umrandet die Außenwandung 35 und weist zwei Segmente mit mehreren Öffnungen 32 für den Zugang zur Filterstrecke und mehreren Öffnungen 33 für den Zugang zur Verschnittstrecke oder Bypassstrecke auf. Entsprechend der beiden Verstellpositionen oder Winkelstellungen 36 und 37 ist beispielhaft eine Verstellmöglichkeit für das Verschnittverhältnis zwischen 0% und 60% dargestellt, abhängig von der diesbezüglichen Winkelverstellung des Verschnitteinstellringes 7 in relativer Position zur so positionierten Filterkartusche 3 bzw. zu deren Einlässen 14 für den Hauptstrom oder Filterstrom bzw. 15 für die Beipass- bzw. Verschnittstrecke.

Die entsprechende Einstellung dieses Verschnitteinstellrings 7 erfolgt durch Verdrehung der Kappe 23 und einer entsprechenden Übertragung dieser Drehbewegung durch die Verschnitteinstellhülse 17 und die zwischen der Verschnitteinstellhülse 17 und dem Verschnitteinstellring 7 angeordnetem Mitnehmer 8. In dieser Ausführungsform nach der Figur 1a sind zwei Anschläge 34 für die Mitnehmer 8 vorgesehen, die beim Einschrauben der Kartusche gegen die Mitnehmer 8 gedrückt werden und den Verschnitteinstellring 7 so relativ zum Kopf festsetzen und damit eine relative Verstellbewegung gegenüber der Kartusche zur Einstellung des Verschnittverhältnisses entsprechend der Positionierung der Kappe 23 bewirken.

Um eine Veränderung des so automatisch eingestellten Verschnittverhältnisses zu ermöglichen, ist im weiteren eine Fixierung zwischen den Mitnehmern 8 und dem Verschnitteinstellring 7 vorgesehen, vorzugsweise in einer Rastanordnung, z.B. durch einen federnden Eingriff der Stifte in entsprechend vorgesehene Vertiefungen. Dadurch kann der Verschnitteinstellring 7 mittels der Kappe 23 sowohl vorwärts als auch rückwärts gedreht werden um eine Erhöhung bzw. eine Reduzierung der Verschnittverhältnisses auch bei diesem automatischen Verschnitteinstellvorgang zu ermöglichen.

Radial außenliegend vom Verschnitteinstellring 7 sind in etwa in der Winkelstellung 90° bzw. 270° die beiden Nocken 20 für die Betätigung des Einlassventils 18 dargestellt. Die Anzahl solcher Nocken 20 entspricht in besonders vorteilhafterweise der Anzahl der in der Draufsicht radial nach außen gesehen angeordneten Befestigungselemente 16 der Filterkartusche 3, hier in der Form von Bajonettverschlüssen, so dass die Patrone unabhängig von ihrer jeweiligen Winkelausrichtung zum Filterkopf in diesen eingesteckt und fehlerfrei betriebsbereit mit diesen verbunden werden kann. Eine Fehlbedienung ist dadurch ausgeschlossen.

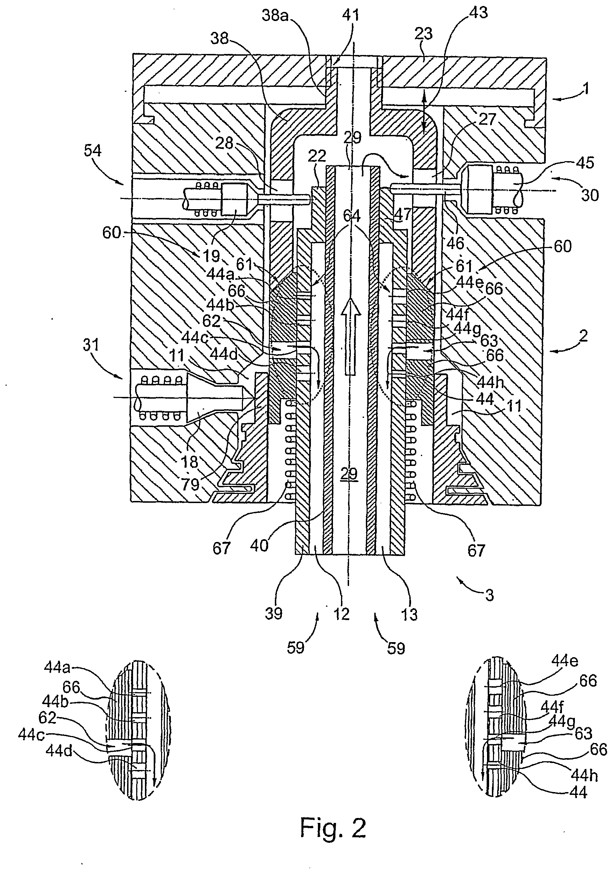

Die Figur 2 zeigt nun eine gegenüber der Figur 1 bzw. 1a dahingehend abgewandelte Ausführungsform eines Wasserfilters, dass die Verschnitteinstellung hier nicht über einen radial relativ zu den beiden Einlassöffnungen 14 für die Filterhauptstrecke und 15 für die Bypassstrecke verstellbaren Einstellring 7 erfolgt, sondern über zwei axial gegeneinander verschiebbare, koaxial angeordnete hülsenförmige Elemente 39 und 61.

Die relative Position der beiden mit Durchlässen 62, 63 bzw. Öffnungen 44a-h versehenen Hülsen 61 und 39 zueinander kann mittels eines Stellorgans, hier beispielhaft in der Form einer Hülse 38, beeinflusst werden. In vorteilhafter Weise wird die Position der Rohwasser-Verteilhülse 61 durch ein Rückstellelement, hier z.B. als Spezialfeder 67 dargestellt, stabilisiert.

Die Hülse 38 ist in gleicher Weise wie bei der radialen Verschnitteinstellung mit dem Stellrad bzw. der Kappe 23 zur Übertragung einer Drehbewegung geeignet verbunden. Abweichend von der oben beschriebenen radialen Verschnittverstellung ist sie jedoch zu Ihrer Positionierung in Längsrichtung entsprechend des Pfeils 43 verstellbar, z.B. mittels einer Gewindeverbindung 41 zwischen der Kappe 23 und einem Ansatz 38a der Hülse 38.

Die Verschnitteinstellung wird in dieser beispielhaften Ausführung gestuft realisiert. Hierzu wird die Rohwasserzufuhr über die Freigabe komplementärer Durchlässe 44a-h für die Filterstrecke 12 bzw. für die Verschnittstrecke 13 eingestellt, bevorzugt in bestimmten Mischverhältnissen. Zur Einstellung dieser Mischverhältnisse können z.B. die beiden Durchlässe 62 und 63 der Rohwasser-Verteilhülse 61 jeweils gleich groß ausgebildet sein. Die für den Durchlass wirksamen, komplementären Öffnungen 44a und 44e, 44b und 44f, 44c und 44g sowie 44d und 44h sind jedoch gegenläufig gestuft von groß bis klein für 44a-44d bzw. von klein bis groß für 44e bis 44h.

In diesem Beispiel ist jeweils die Freigabe von nur zwei komplementären Öffnungen 44a bis 44h durch die beiden Durchlässe 62 und 63 vorgesehen. In davon abgewandelten Ausführungen sind aber auch andere Durchlasskombinationen möglich, um z.B. eine gegebenenfalls feinere und/oder weniger sprunghafte Verstellung des Verschnittverhältnisses zu ermöglichen.

Die komplementäre, koaxiale Hülse 39 ist als Hals der Kartusche 3 ausgebildet und mit den oben beschriebenen, im Querschnitt vorzugsweise jeweils gegenläufig abgestuften Öffnungen 44a-h für den Eintritt des durch das Zulaufventil 18 zuströmenden Wassers in die Filterstrecke über den Kanal 12 bzw. in die Verschnittstrecke über den Kanal 13 versehen. Der Zulauf des Wassers ist durch die einzelnen Pfeile dargestellt, die in der Kammer 11 die Hülse 61 rundum umströmend gezeigt sind und so sowohl von links als auch recht in dieser Schnittdarstellung durch die jeweiligen Öffnungen 62 bzw. 63 eintreten. Der Austritt des filtrierten Wassers erfolgt wiederum entsprechend durch den Filterausgang 29 und hier zusätzlich über die Passage eines Auslassventils 45. Dieses wird über einen Ventilstößel 46 durch den betreffenden Nocken 47 gesteuert.

In einer abgewandelten Ausführungsform ist es z.B. auch möglich, dass ein vorzugsweise zentraler "Dorn" seine Höhe in Abhängigkeit von der Position der sogenannten Bypass-Einstellkappe 23 verändert, und dabei eine unterschiedliche Anzahl von Durchlässen, beispielweise in der Form von Bohrungen, in einem entsprechend zugeordneten Einlasskanal der Filterkerze zur Einstellung des Verschnittverhältnisses verschließt. Vorzugsweise ist ein solcher Einlasskanal mit wenigstens einer axial orientierten Lochreihe im Bereich des Filterkerzenhalses versehen. Dies bietet sowohl hinsichtlich der Herstellung als auch Montage aufgrund eines Verhältnismäßig einfachen Aufbaus Vorteile.

Rein schematisch sind ergänzend noch ein Nocken 22 für die Steuerung des Spül- bzw. des Entspannungsventils 19 und ein Nocken 47 für die Ansteuerung des Auslassventils 45 dargestellt. Das Auslassventil 45 soll durch einen Nocken 47 immer dann geöffnet sein, wenn die Patrone bzw. Kartusche fest eingeschraubt ist, das Spül- bzw. Entlastungsventil soll nur kurz während des Einschraubvorgangs bzw. kurz während des Ausschraubvorgangs geöffnet werden um beim Einschrauben einer neuen Filterkartusche diese kurz spülen zu können bzw. beim Ausschrauben eine Druckentlastung des Filters 1 über eine dafür vorgesehene Ablassleitung zu ermöglichen. Zur Steuerung des Einlassventils 18 ist ein Ansatz oder Nocken 79 vorgesehen. Z.B. im unteren Halsbereich der Filterpatrone, um beim Einsetzen bzw. Entfernen der Patrone das Einlassventil 18 zu betätigen.

Die Ansteuerung des Verschnittverhältnisses erfolgt bei dieser Ausführungsform, wie oben zum Teil bereits ausgeführt, durch die Verstellung des Stellrades 23. Hierbei erfolgt durch die Drehbewegung des Stellrades eine axiale Verschiebung der Hülse 38, und in Folge dessen eine Verschiebung der Rohwasser-Verteilhülse 61. Diese überdeckt die Hülse 39 der Filterkartusche koaxial und verschließt bzw. gibt, je nach Ausführungsform und entsprechender Positionierung, zwei oder mehrere der komplementären Öffnungen 44 a-h für den Rohwassereintritt in den Filter frei. Durch ein gegenläufiges Verschlussverhältnis zwischen dem wirksamen Querschnitt des Hauptstroms, also des Filterstroms, und dem wirksamen Querschnitt der Verschnittstrecke, also des Bypassstroms wird bewirkt dass das Innendruckverhältnis im Filter 1 und ein vom Durchströmungsvolumen weitgehend unabhängiges Verschnittverhältnis für alle Verschnitteinstellungen gleich bleibt und somit eine im Wesentlichen über die gesamte Verschnitteinstellung gleichbleibende Wirkung des Filter erzielt werden kann.

Die beiden Filterstrecken 12, 13 sind durch die Hülse 40 gegenüber dem den Filter verlassenden Filtratstrom über den Filterausgang 29 leitungstechnisch abgegrenzt.

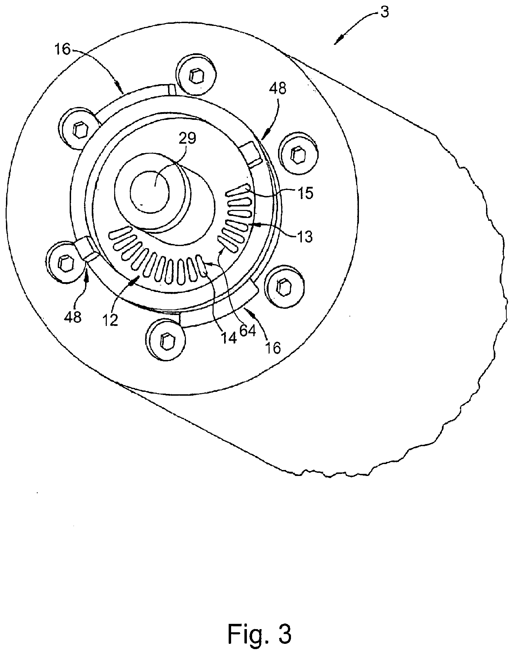

Die Figur 3 zeigt eine perspektivische Draufsicht auf eine Filterkartusche 3 mit dem stirnseitig sichtbaren Filterausgang 29 und den beiden Einlässen 12 zur Filterstrecke und 13 zur Verschnitt- bzw. Bypassstrecke. Der Einlass zur Filterstrecke 12 und der Einlass zur Verschnittstrecke 13 ist jeweils durch eine Abdeckung mit länglichen Schlitzen aufweisenden Öffnungen 14 bzw. 15 dargestellt. Diese können beispielsweise als Grobfilter für im Rohwasser zugeführte, größere Partikeln dienen. Zusätzlich sind noch zwei radial ausgerichtete Schlüsselelemente 48 dargestellt, die z.B. sicherstellen können, dass nur jeweils für den betreffenden Filterkopf vorgesehene Filterkartuschen Anwendung finden können. Vorzugsweise greifen Sie in entsprechend komplementäre Ausnehmungen an einem Element des Filterkopfes ein und können in besonders bevorzugter Weise auch für die Betätigung weiterer Elemente im Kopf dienen, z.B. zur Betätigung von Ventilen oder dergleichen.

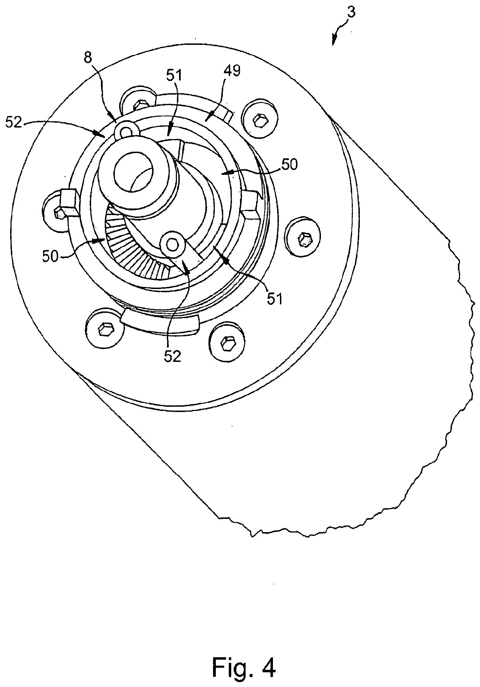

Die Figur 4 zeigt entsprechend der Darstellung der Figur 3 wiederum eine Filterkartusche 3, hier ergänzt durch ein Verschnitteinstellelement 49, welches in dieser Ausführungsform beispielsweise der Kartusche zugeordnet sein kann. In einer demgegenüber abgewandelten Ausführungsform kann das Verschnitteinstellelement jedoch auch dem Filterkopf zugeordnet sein, so dass sich eine zweigeteilte Verschnitteinstellvorrichtung ergibt, die eine zusätzliche Sicherheit vor beabsichtigter und/oder unbeabsichtigter Manipulation bewirkt.

Das Verschnitteinstellelement 49, das auch als Rohwasser-Verteilungselement bezeichnet wird, ist in etwa segmentartig in zwei Durchlässe 50 und zwei Abdeckungen 51 aufgeteilt. Ihre Funktionsweise wird durch Gegenüberstellung der beiden Figuren 3 und 4 deutlich. Je nach relativer Position des Verschnitteinstellelemente 49 in Bezug auf die Öffnung 14, 15 der Filterstrecke 12 bzw. auf die Verschnittstrecke 13 wird eine Veränderung des jeweiligen wirksamen Durchflussquerschnittes bewirkt, und zwar in besonders vorteilhafterweise dahingehend, dass für alle Verschnittverhältnisseinstellungen ein im Wesentlichen gleichbleibender gesamtwirksamer Durchflussquerschnitt aufrecht erhalten bleibt, und somit ein im Wesentlichen gleichbleibender Filterinnendruck. Bei einer Verdrehung im Uhrzeigersinn wird eine Erhöhung des wirksamen Durchflussquerschnitts für die Filterstrecke 12 und eine Erniedrigung des wirksamen Durchflussquerschnitts für die Verschnittstrecke 13 bewirkt. Bei einer Drehung in entgegengesetzt des Uhrzeigersinns wird eine dementsprechend entgegengerichtete Wirkung erzielt.

Die beiden Mitnehmer 8 weisen jeweils ein Fixierelement 52 auf, hier z.B. dargestellt in der Form eines federelastischen Klammerelementes. Dieses federelastische Klammerelement kann bei einer Bestückung des Filterkopfes 2 mit einer entsprechenden Filterkartusche 3 auf ein entsprechendes Gegenstück aufgeschoben und über die Klammerwirkung an diesem befestigt werden. Diese Befestigung kann je nach Ausführungsform als unlösbare oder auch als lösbare Befestigung ausgebildet sein. Die wiederlösbare Ausführungsform kann beispielsweise durch Überwindung eines entsprechenden Festhaltewiderstands wieder entnehmbar sein.

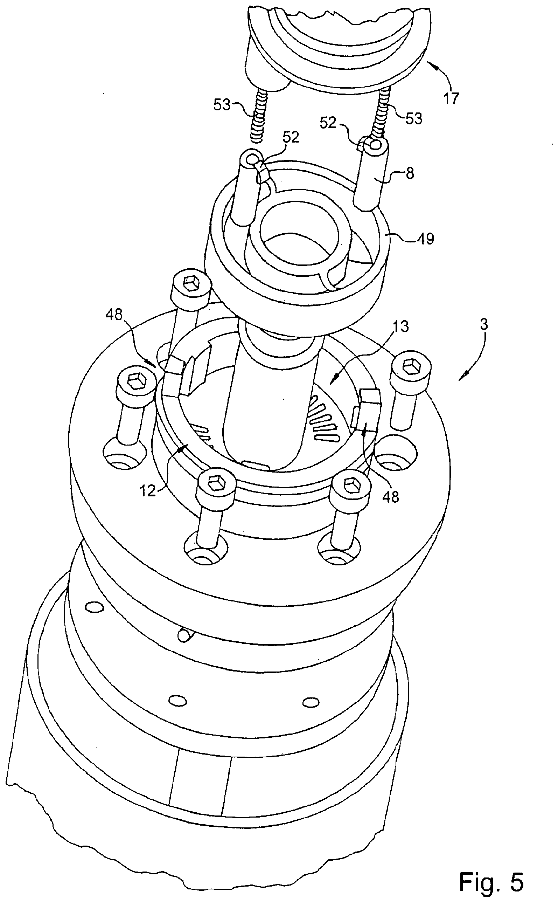

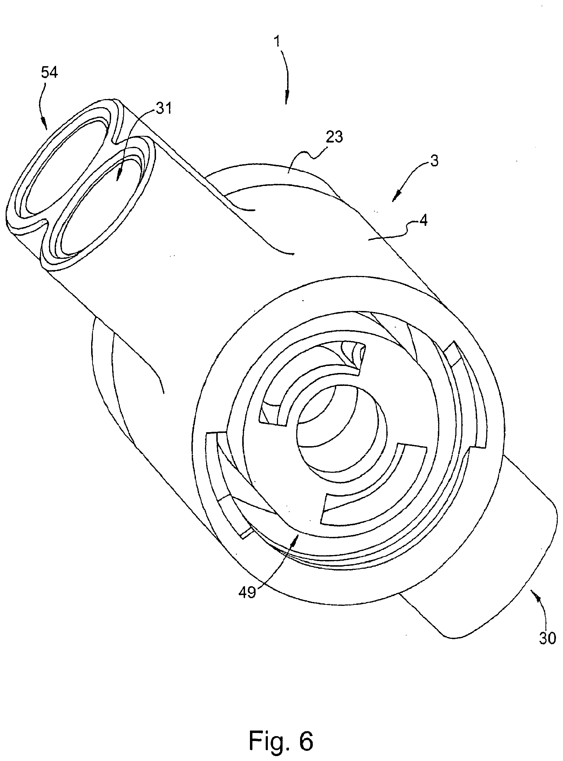

Die Figur 5 zeigt eine weitere schematische Darstellung in explosionsartiger Anordnung einzelner Elemente des Wasserfilters 1. Die Figur 6 zeigt eine Unteransicht auf ein Gehäuse 4 des Filterkopfes 2 mit schematisch darin dargestelltem Verschnitteinstellelement bzw. Rohwasser-Verteilungselement als komplementäres Teil zum Teilstrom-Kanalführungselement, die beide gemeinsam die Verschnitteinstellvorrichtung entsprechend der Figur 4 ausbilden. Die Zuordnung des Verschnitteinstellelementes 49 kann, wie oben dargelegt, je nach Ausführungsform zum Filterkopf 2 gehörig sein bzw. zur Filterkartusche 3. Die drei Anschlüsse des Filterkopfes 2 sind der Einlass 31 für den Zulauf des Rohwassers, der Auslass 30 für den Ablauf des Filtratstroms und der Entspannungs- und Spülauslass 54 für eine geführte Entsorgung des über das Entspannungs- bzw. Spülventil abgelassenen Wassers.

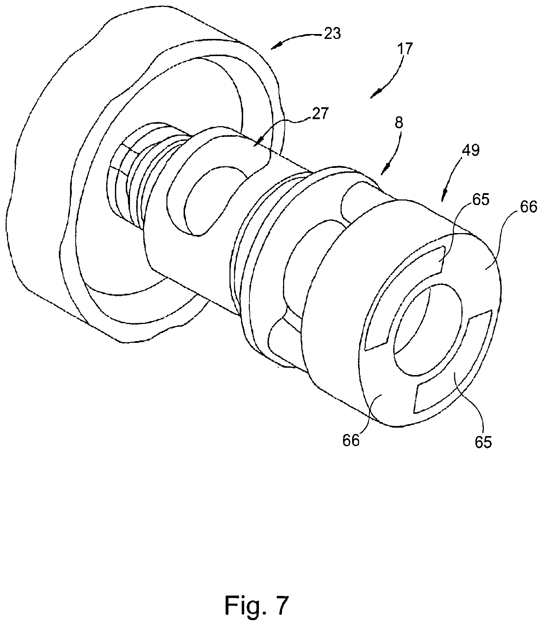

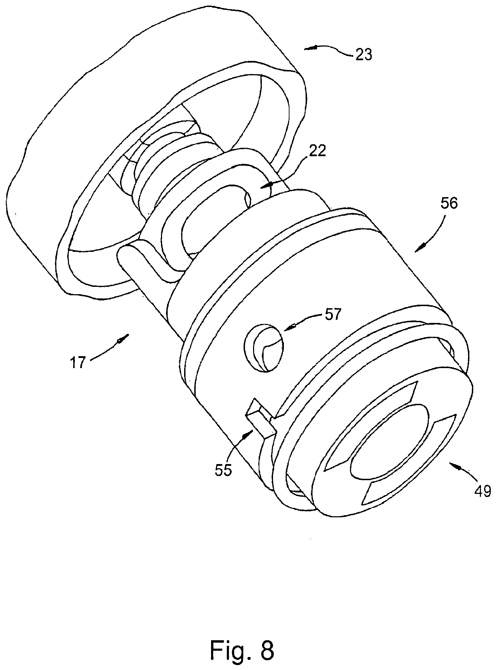

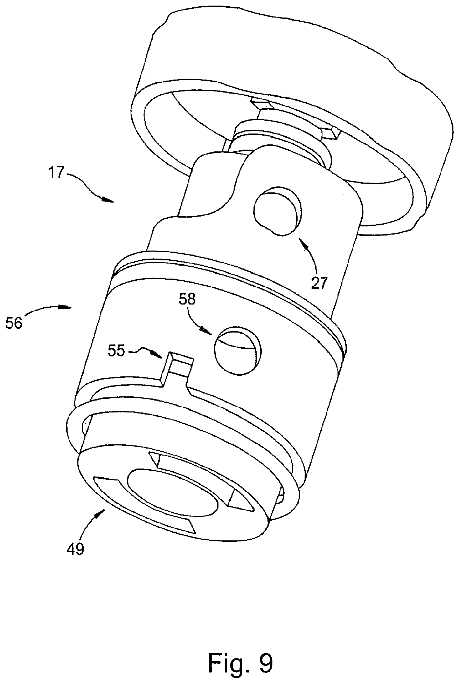

Die Figuren 7 bis 9 zeigen weitere Ansichten einzelner Elemente des Wasserfilters 1. Die Figur 7 zeigt die Einstellkappe 23, die daran anschließende und die Drehbewegung übertragende Verschnitteinstellhülse 17 mit der darin ausgebildeten Öffnung 27 für Austritt des Filtratstroms in Richtung zum Auslass 30. An die Verschnitteinstellhülse 17 schließt sich über die Mitnehmer 8 angekoppelt das Verschnitteinstellelement 49 an. Eine weitere entsprechende Darstellung ist in der Figur 8 zu sehen, die gegenüber der Figur 7 durch den zusätzlichen dargestellten Ventilkörper 56 ergänzt ist.
Dieser Ventilkörper 56 weist eine Ventilöffnung 57 als Einlassventil auf, dass z.B. durch das zum Verschlüsselungselement 48 komplementäre Verschlüsselungselement 55 hinsichtlich einer Öffnungsstellung bzw. einer Verschlussstellung durch Verdrehen beim Ein- bzw. Ausschrauben der Filterkartusche betätigbar ist. Entsprechendes gilt für die Darstellung in der Figur 9, bei dem im Ventilkörper 56 eine zusätzliche Öffnung 58 dargestellt ist. Durch diese zusätzliche Ventilöffnung 58 kann dieser Ventilkörper 56 in verschiedenen Ausführungsformen von Filterköpfen mit zum Teil unterschiedlichen Filterfunktionen eingesetzt bzw. verwendet werden. Es handelt sich somit um einen multifunktionalen Ventilkörper 56.

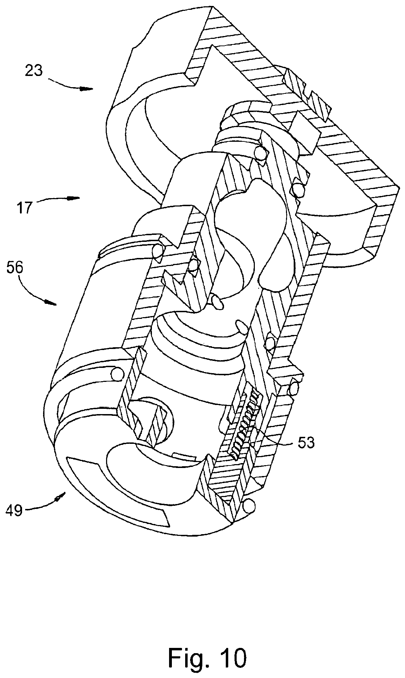

Die Figur 10 zeigt abschließend eine Schnittdarstellung durch die Elemente des Wasserfilters 1 wie sie z.B. in der Figur 9 dargestellt sind. Der Schnitt verläuft durch den Mitnehmer 8 und das darin angeordnete Federelement 53, welches dafür sorgt, dass das Verschnitteinstellelement 49 im in den Filterkopf 2 eingebauten Zustand der Filterkartusche federelastisch gegen die Stirnseite der Filterkartusche gepresst wird, um so eine einwandfreie Aufteilung des Rohwasserstroms auf die Filterstrecke 12 bzw. auf die Verschnittstrecke 13 zu ermöglichen.

### Bezugszeichenliste:

- 1: Wasserfilter
- 2: Filterkopf
- 3: Filterkartusche
- 4: Gehäuse
- 5: Bohrung
- 6: Bohrung
- 7: Verschnitteinstellring/Rohwasser-Verteilungselement (Filterkartusche)
- 8: Mitnehmer
- 9: Dichtung
- 10: Dichtung
- 11: Rohwasserzulauf
- 12: Aufbereitungsstrecke
- 13: Aufbereitungsstrecke
- 14: Durchlass
- 15: Durchlass
- 16: Bajonett
- 17: Verschnitteinstellhülse
- 18: Ventil
- 19: Ventil
- 20: Nocken
- 21: Ventilsstößel
- 22: Mitnehmer
- 23: Kappe
- 24: Rastung
- 25: Dichtung
- 26: Schraube
- 27: Öffnung
- 28: Öffnung
- 29: Filterausgang
- 30: Auslass
- 31: Einlass
- 32: Öffnung
- 33: Öffnung
- 34: Anschlag
- 35: Außenwandung
- 36: Verstellposition
- 37: Verstellposition
- 38: Hülse
- 39: Hülse
- 40: Hülse
- 41: Gewindeverbindung
- 42: Ansatz
- 43: Pfeil
- 44 a-h: Öffnung/Durchlasselement
- 45: Auslassventil
- 46: Stößel
- 47: Nocken
- 48: Schlüsselelement
- 49: Verschnitteinstellelement/Rohwasser-Verteilungselement (Filterkopf)
- 50: Durchlass
- 51: Abdeckung
- 52: Fixierelement
- 53: Federelement
- 54: Entspannungs- und Spülauslass
- 55: Verschlüsselungselement
- 56: Ventilkörper
- 57: Öffnung
- 58: Öffnung
- 59: Verschneidvorrichtung
- 60: Einstellvorrichtung
- 61: Rohwasser-Verteilhülse/Rohwasser-Verteilungselement (Filterkartusche)
- 62: Durchlass
- 63: Durchlass
- 64: Teilstrom-Kanalführungselement
- 65: Öffnung/Durchlasselement
- 66: Abdeckelement
- 67: Rückstellelement
- 79: Nocke/ Ansatz

## Patentansprüche

1. Wasserfilter (1), bestehend aus einem Filterkopf (2), einer auswechselbaren Filterkartusche (3), einer Verschneidevorrichtung (59) und einer Einstellvorrichtung (60) zur Einstellung eines Teilstromverhältnisses zwischen mindestens zwei Strömungspfaden (12, 13), wobei wenigstens ein Strömungspfad (12) eine Filterstrecke umfasst, **dadurch gekennzeichnet, dass** die Einstellvorrichtung (60) ein im bzw. am Filterkopf (2) angeordnetes Rohwasser-Verteilungselement (49, 61) und ein dazu komplementäres, in bzw. an der Filterkartusche (3) angeordnetes Teilstrom-Kanalführungselement (64) umfasst, die erst durch Einbau der Filterkartuschen (3) in den Filterkopf (2) zur Einstellung des Teilstromverhältnisses zusammenfügbar und/oder gegeneinander positionierbar sind.

2. Wasserfilter nach Anspruch 1, **dadurch gekennzeichnet, dass** das Rohwasser-Verteilungselement (49, 61) gegenüber dem Teilstrom-Kanalführungselement (64) radial verstellbar ausgebildet ist.

3. Wasserfilter nach einem der vorangehenden Ansprüche, **dadurch gekennzeichnet, dass** das Rohwasser-Verteilungselement (49, 61) gegenüber dem Teilstrom-Kanalführungselement (64) axial verstellbar ausgebildet ist.

4. Wasserfilter nach einem der vorangehenden Ansprüche, **dadurch gekennzeichnet, dass** das Rohwasser-Verteilungselement (49) als Teil des Filterkopfes (2) ausgebildet ist.

5. Wasserfilter nach einem der vorangehenden Ansprüche, **dadurch gekennzeichnet, dass** das Rohwasser-Verteilungselement (49) als in den Filterkopf (2) einsetzbares Element ausgebildet ist.

6. Wasserfilter nach einem der vorangehenden Ansprüche, **dadurch gekennzeichnet, dass** eine unlösbare Verbindung zwischen Rohwasser-Verteilungselement (49) und Filterkopf (2) vorgesehen ist.

7. Wasserfilter nach einem der vorangehenden Ansprüche, **dadurch gekennzeichnet, dass** eine lösbare Verbindung zwischen Rohwasser-Verteilungselement (49) und Filterkopf (2) vorgesehen ist.

8. Wasserfilter nach einem der vorangehenden Ansprüche, **dadurch gekennzeichnet, dass** das Rohwasser-Verteilungselement (49, 68) als Wechselelement ausgebildet ist.

9. Wasserfilter nach einem der vorangehenden Ansprüche, **dadurch gekennzeichnet, dass** ein Kontrollelement (23) für das Rohwasser-Verteilungselement vorgesehen ist.

10. Wasserfilter nach einem der vorangehenden Ansprüche, **dadurch gekennzeichnet, dass** eine Positioniereinheit (17, 23) für das Rohwasser-Verteilungselement (49) im Filterkopf (2) vorgesehen ist.

11. Wasserfilter nach einem der vorangehenden Ansprüche, **dadurch gekennzeichnet, dass** das Rohwasser-Verteilungselement (49, 61) zumindest ein Durchlass- (32, 33, 44a-h, 50, 65) und/oder ein Abdeckelement (51, 66) umfasst.

12. Wasserfilter nach einem der vorangehenden Ansprüche, **dadurch gekennzeichnet, dass** das Rohwasser-Verteilungselement eine Ring- oder Scheibenform aufweist.

13. Wasserfilter nach einem der vorangehenden Ansprüche, **dadurch gekennzeichnet, dass** das Rohwasser-Verteilungselement (61) eine Hülsenform aufweist.

14. Wasserfilter nach einem der vorangehenden Ansprüche, **dadurch gekennzeichnet, dass** das Teilstrom-Kanalführungselement (64) mindestens einen Filterstreckeneinlass (12) und mindestens einen Verschnittstreckeneinlass (13) oder Filter- oder Wasseraufbereitungsstreckeneinlass umfasst.

15. Wasserfilter nach einem der vorangehenden Ansprüche, **dadurch gekennzeichnet, dass** der vom Rohwasser-Verteilungselement (49, 61) wirksam freigegebene, aus der Summe der beiden Teilströme (12, 13) gebildete Gesamtquerschnitt des Teilstrom-Kanalführungselementes (64, 69) im Wesentlichen in allen Verschnitteinstellungen gleich groß ist.

16. Wasserfilter nach einem der vorangehenden Ansprüche, **dadurch gekennzeichnet, dass** der vom Rohwasser-Verteilungselement (49, 61) wirksam freigegebene, aus der Summe der beiden Teilströme (12, 13) gebildete Gesamtquerschnitt des Teilstrom-Kanalführungselementes (64, 69) in unterschiedlichen Verschnitteinstellungen unterschiedlich groß ist.

17. Wasserfilter nach einem der vorangehenden Ansprüche, **dadurch gekennzeichnet, dass** zwischen einem dem Filterkopf (2) zugeordneten Element (48) und einem der Filterkartusche (3) zugeordneten Element (55) eine Verschlüsselung ausgebildet ist.

18. Wasserfilter nach einem der vorangehenden Ansprüche, **dadurch gekennzeichnet, dass** ein Kontrollelement (47, 79) für eine bestückungsabhängige Positionierung eines Einlassventils (18) und/oder eines Auslassventils (45) vorgesehen ist.

## Claims

1. A water filter (1), comprising a filter head (2), an exchangeable filter cartridge (3), a blending device (59) and an adjustment device (60) for adjusting a partial flow ratio between at least two flow paths (12, 13), wherein at least one flow path (12) comprises a filter section, **characterised in that** the adjustment device (60) comprises a raw water distribution element (49, 61) arranged in or on the filter head (2) and a partial flow channel guide element (64) which is complementary thereto and is arranged in or on the filter cartridge (3), which only by installation of the filter cartridge (3) into the filter head (2) can be joined together and/or can be positioned counter to one other for adjusting the partial flow ratio.

2. The water filter according to claim 1, **characterised in that** the raw water distribution element (49, 61) is designed to be radially adjustable relative to the partial flow channel guide element (64).

3. The water filter according to one of the preceding claims, **characterised in that** the raw water distribution element (49, 61) is designed to be axially adjustable relative to the partial flow channel guide element (64).

4. The water filter according to one of the preceding claims, **characterised in that** the raw water distribution element (49) is designed as part of the filter head (2).

5. The water filter according to one of the preceding claims, **characterised in that** the raw water distribution element (49) is designed as an element which can be inserted into the filter head (2).

6. The water filter according to one of the preceding claims, **characterised in that** an undetachable connection is provided between the raw water distribution element (49) and the filter head (2).

7. The water filter according to one of the preceding claims, **characterised in that** a detachable connection between the raw water distribution element (49) and the filter head (2) is provided.

8. The water filter according to one of the preceding claims, **characterised in that** the raw water distribution element (49, 68) is designed as an interchangeable element.

9. The water filter according to one of the preceding claims, **characterised in that** a control element (23) is provided for the raw water distribution element.

10. The water filter according to one of the preceding claims, **characterised in that** a positioning unit (17, 23) is provided for the raw water distribution element (49) in the filter head (2).

11. The water filter according to one of the preceding claims, **characterised in that** the raw water distribution element (49, 61) comprises at least one passage element (32, 33, 44a-h, 50, 65) and/or one cover element (51, 66).

12. The water filter according to one of the preceding claims, **characterised in that** the raw water distribution element has a ring shape or disc shape.

13. The water filter according to one of the preceding claims, **characterised in that** the raw water distribution element (61) has a sleeve shape.

14. The water filter according to one of the preceding claims, **characterised in that** the partial flow channel guide element (64) comprises at least one filter section inlet (12) and at least one blend section inlet (13) or filter section inlet or water treatment section inlet.

15. The water filter according to one of the preceding claims, **characterised in that** the total cross-section of the partial flow channel guide element (64, 69) effective released, operatively opened by the raw water distribution element (49, 61) and formed from the sum of the two partial flows (12, 13), is substantially of an identical size in all blend settings.

16. The water filter according to one of the preceding claims, **characterised in that** the total cross-section of the partial flow channel guide element (64, 69) effective released, operatively opened by the raw water distribution element (49, 61) and formed from the sum of the two partial flows (12, 13), is substantially of a different size in all blend settings.

17. The water filter according to one of the preceding claims, **characterised in that** an encryption is configured between an element (48) associated with the filter head (2) and an element (55) associated with the filter cartridge (3).

18. The water filter according to one of the preceding claims, **characterised in that** a control element (47, 79) is provided for an equipment-dependent positioning of an inlet valve (18) and/or an outlet valve (45).

## Revendications

1. Filtre à eau (1), constitué d'une tête de filtre (2), d'une cartouche de filtre (3) remplaçable, d'un dispositif de mélange (59) et d'un dispositif de réglage (60) pour le réglage d'un rapport d'écoulement partiel entre au moins deux trajets de flux (12, 13), au moins un trajet de flux (12) comprenant une section de filtre, **caractérisé en ce que** le dispositif de réglage (60) comprend un élément de division d'eau brute (49, 61) disposé sur la tête de filtre (2) et, complémentaire à celui-ci, un élément de guidage de canal d'écoulement partiel (64) disposé dans ou sur la cartouche de filtre (3), qui peuvent être assemblés uniquement par le montage de la cartouche de filtre (3) dans la tête de filtre (2) pour le réglage du rapport d'écoulement partiel et/ou positionnés l'un en face de l'autre.

2. Filtre à eau selon la revendication 1, **caractérisé en ce que** l'élément de division d'eau brute (49, 61) est formé de façon à pouvoir être réglé sur le plan radial par rapport à l'élément de guidage de canal d'écoulement partiel (64).

3. Filtre à eau selon une des revendications précédentes, **caractérisé en ce que** l'élément de division d'eau brute (49, 61) est formé de façon à pouvoir être réglé sur le plan axial par rapport à l'élément de guidage de canal d'écoulement partiel (64).

4. Filtre à eau selon une des revendications précédentes, **caractérisé en ce que** l'élément de division d'eau brute (49) est formé comme une partie de la tête de filtre (2).

5. Filtre à eau selon une des revendications précédentes, **caractérisé en ce que** l'élément de division d'eau brute (49) est formé comme un élément pouvant être introduit dans la tête de filtre (2).

6. Filtre à eau selon une des revendications précédentes, **caractérisé en ce qu'**une liaison fixe est prévue entre l'élément de division d'eau brute (49) et la tête de filtre (2).

7. Filtre à eau selon une des revendications précédentes, **caractérisé en ce qu'**une liaison détachable est prévue entre l'élément de division d'eau brute (49) et la tête de filtre (2).

8. Filtre à eau selon une des revendications précédentes, **caractérisé en ce que** l'élément de division d'eau brute (49, 68) est formé comme un élément échange.

9. Filtre à eau selon une des revendications précédentes, **caractérisé en ce qu'**un élément de commande (23) est prévu pour l'élément de division d'eau brute.

10. Filtre à eau selon une des revendications précédentes, **caractérisé en ce qu'**une unité de positionnement (17, 23) est prévue pour l'élément de division d'eau brute (49) dans la tête de filtre (2).

11. Filtre à eau selon une des revendications précédentes, **caractérisé en ce que** l'élément de division d'eau brute (49, 61) comprend au moins un élément de passage (32, 33, 44a-h, 50, 65) et/ou un élément de couverture (51, 66).

12. Filtre à eau selon une des revendications précédentes, **caractérisé en ce que** l'élément de division d'eau brute présente une forme d'anneau ou de disque.

13. Filtre à eau selon une des revendications précédentes, **caractérisé en ce que** l'élément de division d'eau brute (61) présente une forme de manchon.

14. Filtre à eau selon une des revendications précédentes, **caractérisé en ce que** l'élément de guidage de canal d'écoulement partiel (64) comprend au moins une entrée de section de filtre (12) et au moins une entrée de section de mélange (13) ou une entrée de section de préparation d'eau ou de filtre.

15. Filtre à eau selon une des revendications précédentes, **caractérisé en ce que** la section transversale totale formée par la somme des deux écoulements partiels (12, 13) libérée efficacement par l'élément de division d'eau brute (49, 61) de l'élément de guidage de canal d'écoulement partiel (64, 69) est de même taille essentiellement dans l'ensemble des positions de mélange.

16. Filtre à eau selon une des revendications précédentes, **caractérisé en ce que** la section transversale totale formée par la somme des deux écoulements partiels (12, 13) libérée efficacement par l'élément de division d'eau brute (49, 61) de l'élément de guidage de canal d'écoulement partiel (64, 69) est de taille différente dans différentes positions de mélange.

17. Filtre à eau selon une des revendications précédentes, **caractérisé en ce qu'**un cryptage est formé entre un élément (48) associé à la tête de filtre (2) et un élément (55) associé à la cartouche de filtre (3).

18. Filtre à eau selon une des revendications précédentes, **caractérisé en ce qu'**un élément de commande (47, 79) est prévu pour un positionnement en fonction de l'équipement d'une soupape d'entrée (18) et/ou d'une soupape de sortie (45).
